# EUROPÄISCHE PATENTSCHRIFT

(11) **EP 3 907 020 B1**
(45) Veröffentlichungstag und Bekanntmachung des Hinweises auf die Patenterteilung: **02.12.2026**
(21) Anmeldenummer: 21156196.4
(22) Anmeldetag: 10.02.2021
(51) Int. Cl.: B22D 17/22, B22D 17/24

(54) **DRUCKGIESSWERKZEUGSYSTEM**
DIE CASTING TOOL SYSTEM
SYSTÈME D'OUTILLAGE DE COULÉE SOUS PRESSION

(30) Priorität: 05.05.2020 DE 102020205645
(43) Veröffentlichungstag der Anmeldung: 10.11.2021
(73) Patentinhaber: castFEX GmbH & Co. KG, 73650 Winterbach (DE)
(72) Erfinder: Aspacher, Ronny, 73614 Schorndorf (DE); Beier, Marco, 73614 Schorndorf (DE); Clauss, Nikolai, 73614 Schorndorf (DE)
(74) Vertreter: Patentanwälte Ruff, Wilhelm, Beier, Dauster & Partner mbB

(56) Entgegenhaltungen:
- WO-A1-2018/096565
- DE-A1- 102015 015 368
- DE-U1- 202015 101 713

## Beschreibung

Die Erfindung bezieht sich auf ein Druckgießwerkzeugsystem für eine Druckgießmaschine zum Gießen von Gussteilen. Dabei ist vorliegend der Begriff Druckgießen in einem breiten Sinn dahingehend zu verstehen, dass er insbesondere sowohl metallisches Druckgießen als auch Kunststoffspritzgießen umfasst. Der Begriff Gussteil wird vorliegend primär nicht zur Bezeichnung des einzelnen gegossenen Teils verwendet, sondern als Artbegriff zur Bezeichnung gegossener Teile gleicher Gestalt, d.h. je zwei Gussteile unterscheiden sich in ihrer Gestalt. Einzelne gegossene Teile werden hingegen vorliegend zur Unterscheidung als Gussprodukte bezeichnet.

Bei herkömmlichen Druckgießsystemen besteht eine enge Beziehung zwischen dem Gussteil und dem eigens dafür gefertigten Druckgießwerkzeugsystem. Dies bedeutet, dass die allermeisten Komponenten herkömmlicher Druckgießwerkzeugsysteme speziell nur für dieses zu gießende Gussteil gefertigt und miteinander zum für dieses Gussteil spezifischen Druckgießwerkzeugsystem, auch kurz Druckgießwerkzeug bezeichnet, zusammengebaut werden. Dies gilt selbst bei relativ geringen Abweichungen der Gussteile voneinander, z.B. für das Gießen von formähnlichen, aber nicht identischen Teilen wie im Fall der Gießfertigung von Teilevarianten. Entsprechend hoch sind die Kosten herkömmlicher Druckgießwerkzeuge, was wiederum das Gießen von Gussteilen in relativ kleinen Stückzahlen bzw. in unterschiedlichen Varianten, wie für die Herstellung von Prototypen und für die Kleinserienfertigung, im Druckguss verhältnismäßig kostenintensiv macht. Zudem bedingt das entsprechende Auf- und Abrüsten des Druckgießwerkzeugs eine Unterbrechung des Gießbetriebs während des Rüstvorgangs, was die Wirtschaftlichkeit mindert.

Das typische herkömmliche Druckgießwerkzeugsystem beinhaltet hierbei zwei Formhälften, i.e. eine bewegliche und eine nicht-bewegliche Formhälfte, und für jede dieser beiden jeweils einen Formrahmen und am Formrahmen festlegbare Einsatzteile, die sowohl konturgebende Formbauteile als auch nicht-konturgebende Formbauteile umfassen. Der Formrahmen und die Formbauteile als Einsatzteile sind individuell auf das zu gießende Gussteil abgestimmt und daher in aller Regel nur zum Gießen dieses einen Gussteils bestimmt und geeignet. Die konturgebenden Formbauteile bilden in einer Montageposition am Formrahmen eine Gießkontur für das zu gießende Gussteil, d.h. sie bestimmen die Kontur einer der Gestalt des Gussteils entsprechenden Gießkavität, die beim Gießvorgang mit einem zugehörigen, unter Druck zugeführten Gießmaterial, wie eine flüssige Metallschmelze oder ein geschmolzenes Kunststoffmaterial, gefüllt wird. Zu den nicht-konturgebenden Formbauteilen gehören beispielsweise Führungsbauteile, Entlüftungsbauteile und Schieberbauteile. Schieberbauteile werden insbesondere zum Gießen von Gussteilen verwendet, die Hinterschnitte und ähnliche Konturen aufweisen, welche kein direktes Entformen ermöglichen, und umfassen in der Regel unbeweglich montierte Schieberträger und daran beweglich montierte Schieberführungen.

Derartige herkömmliche Druckgießwerkzeugsysteme sind beispielsweise in der Patentschrift DE 10 2012 019 357 B4 sowie den Offenlegungsschriften DE 10 2014 103 532 A1 und WO 2017/142731 A1 offenbart. Dabei wird in der DE 10 2012 019 357 B4 ein Druckgießwerkzeugsystem mit einer speziellen, auf einer Formplatte angeordneten Schieberführung offenbart. In der DE 10 2014 103 532 A1 wird ein Druckgießwerkzeugsystem offenbart, das speziell zum Gießen einer Tragstruktur eines Ölfiltermoduls für eine Brennkraftmaschine als dem zu gießenden Gussteil ausgelegt ist, und in der WO 2017/142731 A1 wird ein Druckgießwerkzeugsystem offenbart, das speziell zum Gießen metallischer Bauteile für Fahrzeuganwendungen ausgelegt ist und hierbei in Bereichen mit besonderer Verschleiß- bzw. Erosionsbelastung austauschbare Einsatzteile als konturbildende Formbauteile verwendet.

In der Dissertationsschrift von Yann Queudeville, Entwicklung einer Methodik zur Modularisierung von Druckgusswerkzeugen, Ergebnisse aus Forschung und Entwicklung, Band 19 (2015), Gießerei-Institut der RWTH Aachen, ISBN 978-3-944601-08-3 (E-Book) wird in einer theoretischen Analyse ein Vorgehen zur Modularisierung von Druckgießwerkzeugen aufgezeigt, um den Entwicklungsprozess von Druckgießwerkzeugen verbessern zu können.

Die Patentschrift DE 35 42 840 C2 offenbart ein Formwerkzeug zum Kunststoffspritzgießen, bei dem Formeinsätze in einer Formplatte aufgenommen sind, wobei ein mittlerer Formeinsatz fest mit der Formplatte verbunden ist, während seitlich anschließende Formeinsätze leicht auswechselbar sein sollen, speziell durch Lösen von mit der Formplatte verschraubten Keilleisten, und unterschiedliche Größe und Gestalt haben können, wobei Unterschiede zur maximalen Länge oder Breite der Form durch Ausgleichsstücke ausgeglichen werden.

Die Gebrauchsmusterschrift DE 20 2015 101 713 U1 offenbart eine Druckgießform, die sich speziell zur schnellen Produktion von Prototypen eignen soll und dazu zwei Formhälften aufweist, die jeweils mindestens einen Formeinsatz mit Konturteilen und ggf. Füllstücken in einer Hohlkammer aufnehmen und eine die Hohlkammer umgebende, ringförmige Führungs- und Haltekontur aufweisen, wobei an der einen Führungs- und Haltekontur ein oder mehrere Halter für Schieber verstellbar angeordnet sind und an der anderen Führungs- und Haltekontur Verriegelungsteile angeordnet sind, die korrespondierend zu den Schiebern ausgerichtet sind und bei geschlossener Form die Schieber bzw. ihre Halter in einer eingestellten Solllage arretieren.

Die Offenlegungsschrift DE 10 2015 015 368 A1 offenbart eine Gießform, die zum Herstellen von unterschiedlichen Bauvarianten eines Gussteils, wie eines Lagerblocks für eine Fahrerhauslagerung eines Nutzfahrzeugs, gedacht ist und dazu eine Grundform mit einer Aufnahme und einen Gießformeinsatz aufweist, der wahlweise in einer ersten Drehstellung zum Herstellen einer ersten Bauvariante und in einer davon verschiedenen zweiten Drehstellung zur Herstellung einer zweiten Bauvariante des Gussteils in der Aufnahme angeordnet werden kann. Speziell wird eine wahlweise Positionierung des Gießformeinsatzes in je einer von zwei um 180° gedrehten Lagen offenbart, wofür eine entsprechende Punkt- oder Spiegelsymmetrie der beteiligten Gießformkomponenten vorausgesetzt ist.

Die Offenlegungsschrift DE 10 2016 121 996 A1 offenbart ein Werkzeugelement für ein Werkzeug zum Kunststoffspitzgießen in einer Konfiguration, mit der die Wartung und der Austausch einzelner Bauteile von Baueinheiten des Werkzeugelements vereinfacht werden soll. Dazu umfasst das Werkzeugelement in einer Ausführung als auswerferseitige Werkzeughälfte eine erste Baueinheit, die durch einen Formeinsatz und eine an dessen Rückseite unter optionaler Zwischenfügung einer Trägerplatte festlegbare Auswerfereinrichtung gebildet ist, und eine zweite Baueinheit, die eine erste Halteplatte, eine zweite Halteplatte, eine Druckplatte und eine Aufspannplatte beinhaltet. Die erste und die zweite Baueinheit sind durch einen Verriegelungsmechanismus miteinander lösbar verbunden, der die Auswerfereinrichtung und den Formeinsatz lösbar mechanisch mit der zweiten Baueinheit koppelt, wobei er mittels eines nutzerbetätigbaren Entriegelungsstabs entriegelt werden kann, der seitlich an der Werkzeughälfte angeordnet ist

Der Erfindung liegt als technisches Problem die Bereitstellung eines Druckgießwerkzeugsystems zugrunde, das verglichen mit den oben erwähnten herkömmlichen Druckgießwerkzeugsystemen ein effizientes, flexibles und kostengünstiges Gießen von Gussteilen auch in relativ geringen Stückzahlen und/oder in mehreren verschiedenen Gussteilvarianten ermöglicht.

Die Erfindung löst dieses Problem durch die Bereitstellung eines Druckgießwerkzeugsystems mit den Merkmalen des Anspruchs 1.

Das erfindungsgemäße Druckgießwerkzeugsystem umfasst eine maschinenbezogene Grundplatte, mindestens einen Satz von konturgebenden Formbauteilen, die in einer Montageposition an der Grundplatte eine Gießkontur für ein jeweils zugehöriges, zu gießendes Gussteil bilden, und eine Mehrzahl von nicht-konturgebenden Werkzeugaufnahme-Modulbauteilen. Die Grundplatte, die Werkzeugaufnahme-Modulbauteile und die konturgebenden Formbauteile sind dafür eingerichtet, zum Gießen des jeweiligen Gussteils den zugehörigen Satz von Formbauteilen und einen zugeordneten Satz der Werkzeugaufnahme-Modulbauteile lösbar an der Grundplatte zu montieren, genauer gesagt an einer betreffenden Befestigungsseite derselben.

Mit dem Begriff maschinenbezogen ist hierbei vorliegend gemeint, dass die Grundplatte zur spezifischen Verwendung an einer zugehörigen Druckgießmaschine eingerichtet ist, d.h. zur Verwendung an einem bestimmten Modell bzw. Typ bzw. an einer bestimmten Maschinengröße der Druckgießmaschine. Für eine Druckgießmaschine anderer Größe bzw. anderen Typs wird eine entsprechend andersartig auf diese andere Maschine abgestimmte, andere Grundplatte verwendet.

Der jeweilige Satz von konturgebenden Formbauteilen bestimmt die Gestalt der Gießkavität und ist dazu entsprechend durch die Kontur des Gussteils bestimmt bzw. definiert, wie dies grundsätzlich für herkömmliche Druckgießwerkzeuge an sich bekannt ist. Mit anderen Worten ist jedem Gussteil, d.h. jeder Gießkavität, ein bestimmter Satz an konturgebenden Formbauteilen zugeordnet, und jedes konturgebende Formbauteil ist speziell auf dieses Gussteil abgestimmt und in aller Regel nur zum Gießen dieses Gussteils, nicht zum Gießen anderer Gussteile verwendbar. Dabei bilden die konturgebenden Formbauteile eines zu einem bestimmten Gussteil gehörigen Satzes zusammen den entsprechenden Formeinsatz für dieses Gussteil, d.h. sie haben im zusammengesetzten Zustand bzw. in ihrem montierten Zustand an der Grundplatte die Funktion des Formeinsatzes, wie er dem Fachmann geläufig ist. Die unterschiedlichen, unter Verwendung des erfindungsgemäßen Druckgießwerkzeugsystems auf einer gleichen Druckgießmaschine zu gießenden Gussteile können sich insbesondere hinsichtlich ihrer Form und/oder ihrer Größe unterscheiden, wobei ihre Formgestalt und ihre Größe praktisch keinen Einschränkungen unterworfen sind, solange diese mit der Maschinengröße bzw. der Größe der Grundplatte kompatibel sind.

Ebenfalls in an sich üblicher Weise fungieren die nicht-konturgebenden Werkzeugaufnahme-Modulbauteile als ergänzende Werkzeugaufnahmebauteile bzw. Hilfswerkzeugteile, u.a. um die konturgebenden Formbauteile sicher an der Grundplatte zu halten und sicherzustellen, dass die Gießform insgesamt den Druckbelastungen beim Druckgießvorgang standhält, und um den Schmelzematerialfluss geeignet zu führen und/oder zu temperieren und für die nötige Entlüftung der Gießkavität zu sorgen und je nach Kontur des Gussteils den Entformungsvorgang zu ermöglichen bzw. zu erleichtern. Im Unterschied zu den oben genannten herkömmlichen Systemen sind jedoch vorliegend die nicht-konturgebenden Werkzeugaufnahmebauteile modular ausgelegt und entsprechend variabel verwendbar, weshalb sie als Werkzeugaufnahme-Modulbauteile bezeichnet sind.

Die Grundplatte weist auf der Befestigungsseite ein Befestigungsraster aus einer Mehrzahl von in einem regelmäßigen oder unregelmäßigen Muster über einen Befestigungsbereich hinweg verteilt angeordneten Befestigungspunkten auf. Dies bedeutet, dass die Befestigungspunkte im Befestigungsbereich in einem zweidimensionalen Rastermuster in zwei senkrechten oder anderweitig nicht-parallelen, schrägen Richtungen gegeneinander versetzt angeordnet sind, vorzugsweise in der einen und/oder der anderen der zwei nicht-parallelen Rasterrichtungen mit regulären, gleichmäßigen Abständen, alternativ mit unregelmäßigen Abständen. Die Grundplatte umfasst somit einen als Rasterplatte ausgeführten Plattenkörper, der die Befestigungspunkte im entsprechenden Rastermuster aufweist. Die Befestigungspunkte können insbesondere von entsprechenden Befestigungsbohrungen gebildet sein, die Befestigungsbolzen oder andere herkömmlich zu Befestigungszwecken bei Druckgießwerkzeugen benutzte Befestigungsmittel aufnehmen können. Alternativ kann z.B. zumindest ein Teil der Befestigungspunkte von Befestigungsbolzen oder Befestigungszapfen gebildet sein, die mit korrespondierenden Gegenbefestigungsmitteln an den zu montierenden Komponenten, wie den konturgebenden Formbauteilen, zusammenwirken. Der Befestigungsbereich kann sich je nach Bedarf über die gesamte oder annähernd die gesamte Ausdehnung der Befestigungsseite erstrecken oder alternativ nur über einen Teilbereich derselben. Dank dieses Befestigungsrasters lassen sich die konturgebenden Formbauteile für ein jeweiliges Gussteil und die zugehörigen nicht-konturgebenden Werkzeugaufnahme-Modulbauteile sehr flexibel in variabler Orientierung und/oder in variabler Lage und/oder in variabler Größe und/oder in variabler Zusammenstellung an der Grundplatte fixieren. Die Befestigungsseite bzw. genauer gesagt deren Befestigungsbereich bildet definitionsgemäß diejenige Plattenebene der Grundplatte, die der Befestigung der genannten Komponenten dient.

Es versteht sich, dass die obige Auflistung von Komponenten des Druckgießwerkzeugsystems nicht abschließend gemeint ist, sondern als Angabe der zur Realisierung der Erfindung mindestens benötigten Komponenten, die einer der beiden Formhälften der Druckgießmaschine, d.h. der beweglichen oder der festen, unbewegten Formhälfte, zugeordnet sind. Zusätzlich umfasst das erfindungsgemäße Druckgießwerkzeugsystem je nach Bedarf und Anwendungsfall weitere Komponenten, die herkömmlicher Art oder speziell auf die Erfindung abgestellter, neuer Art sein können. Insbesondere kann das Druckgießwerkzeugsystem eine weitere Grundplatte und/oder weitere konturgebende Formbauteile und/oder weitere nicht-konturgebende Werkzeugaufnahme-Modulbauteile in erfindungsgemäßer oder herkömmlicher Ausführung zur Verwendung an der jeweils anderen der beiden Formhälften umfassen.

Gemäß einem Aspekt der Erfindung ist der mindestens eine Satz von konturgebenden Formbauteilen mit dem zugeordneten Satz der Werkzeugaufnahme-Modulbauteile in wenigstens zwei unterschiedlichen Orientierungen und/oder in wenigstens zwei gegeneinander verschobenen Positionen an der Grundplatte, d.h. an deren Befestigungsseite, montierbar, d.h. in zwei oder drei oder einer beliebigen anderen Anzahl von unterschiedlichen Orientierungen bzw. verschobenen Positionen größer als drei. Mit dem Begriff Orientierung ist hierbei insbesondere die Drehlage der konturgebenden Formbauteilen und der Werkzeugaufnahme-Modulbauteile an der Befestigungsseite der Grundplatte gemeint, mit dem Begriff Position bzw. Lage insbesondere die translatorische bzw. transversale Position auf der Befestigungsseite der Grundplatte. Mit anderen Worten gehen zwei verschiedene Orientierungen primär durch eine Drehung um eine zur Plattenebene der Befestigungsseite senkrechte Drehachse ineinander über, wobei die Drehachse vorzugsweise innerhalb eines Bereiches liegt, über den hinweg sich der durch die konturgebenden Formbauteile und die Werkzeugaufnahme-Modulbauteile gebildete Aufbau an der Befestigungsseite der Grundplatte erstreckt, während zwei verschiedene Positionen bzw. Lagen primär durch eine Verschiebung in einer zur Plattenebene der Befestigungsseite parallelen Translationsrichtung ineinander übergehen. Das an der Befestigungsseite der Grundplatte gebildete Befestigungsraster schafft eine optimale Voraussetzung dafür, dass diese variable Montierbarkeit der Formbauteile und der Werkzeugaufnahme-Modulbauteile an der Befestigungsseite der Grundplatte in konstruktiv vorteilhafter und funktionell zuverlässiger Weise realisiert werden kann.

Dieser Erfindungsaspekt ermöglicht es, die konturgebenden Formbauteile und die nicht-konturgebenden Werkzeugaufnahme-Modulbauteile in einer für das jeweils zu gießende Gussteil optimalen Orientierung bzw. Position an der Grundplatte befestigen zu können. Die optimale Lage bzw. Orientierung des Gussteils in der Druckgießform ist unter anderem durch die Geometrie des Gussteils und die Notwendigkeit bestimmt, Hinterschnitte, soweit vorhanden, entformen zu können, wofür typischerweise Schieberbauteile mit Schieberführungen zum Einsatz kommen, die geeignete Verschieberichtungen aufweisen. Weitere Einflussgrößen für die Festlegung der optimalen Orientierung und/oder der optimalen Position des Gussteils in der Gießform sind eine fertigungstechnisch optimierte Gestaltung der Zufuhr des Schmelzematerials und die sogenannten Anschnitte, d.h. eine Optimierung des Kanalsystems zum Einströmen des Schmelzematerials in die Gießkavität, d.h. in die Formkavität. Je nach dem zu gießenden Gussteil kann hierfür z.B. in einem Fall eine zur horizontalen oder vertikalen Maschinenrichtung der Druckgießmaschine parallele Ausrichtung der Verschieberichtung der Schieberbauteile bzw. Schieberführungen günstig sein, hingegen in einem anderen Fall für das Gießen eines anderen Gussteils eine nicht-parallele, schräge Ausrichtung der Schieberbauteil-Verschieberichtung relativ zur horizontalen bzw. vertikalen Maschinenrichtung.

Mit diesem Erfindungsaspekt ist es flexibel und damit effizient möglich, diese Optimierungsanforderungen sehr einfach dadurch zu erfüllen, dass für den jeweiligen Fall der Satz konturgebender Formbauteile und der zugeordnete Satz von Werkzeugaufnahme-Modulbauteilen in der jeweils günstigsten Orientierung bzw. Lage an der Grundplatte befestigt werden können.

Gemäß einem weiteren Aspekt der Erfindung, der zusätzlich oder alternativ zum vorgenannten Erfindungsaspekt in entsprechenden Ausführungen der Erfindung realisiert ist, sind mehrere Sätze von konturgebenden Formbauteilen mit je einem zugeordneten Satz der Werkzeugaufnahme-Modulbauteile zur wahlweisen Montage an der Grundplatte vorhanden.

Dieser Erfindungsaspekt ermöglicht das Gießen von zwei oder mehr unterschiedlichen Gussteilen, d.h. solchen unterschiedlicher Form und/oder Größe, unter Verwendung der gleichen Druckgießmaschine mit der gleichen Grundplatte. Zum Gießen des jeweiligen Gussteils wird aus den vorhandenen Sätzen von konturgebenden Formbauteilen der zu diesem Gussteil gehörige Satz ausgewählt, und der ausgewählte Satz von konturgebenden Formbauteilen wird zusammen mit dem zugeordneten Satz der Werkzeugaufnahme-Modulbauteile an der Grundplatte befestigt.

Im Unterschied zu den oben genannten herkömmlichen Druckgießwerkzeugsystemen ist somit bei der vorliegenden Erfindung die Grundplatte zusammen mit den hierauf passend abgestimmten konturgebenden Formbauteilen und nicht-konturgebenden Werkzeugaufnahme-Modulbauteilen dafür konfiguriert, variabel in einer Mehrzahl unterschiedlicher möglicher Konfigurationen jeweils den zum aktuell zu gießenden Gussteil gehörigen Satz von konturgebenden Formbauteilen und einen zugeordneten Satz der Werkzeugaufnahme-Modulbauteile lösbar an der Grundplatte zu halten, genauer gesagt an deren Befestigungsseite, bei Bedarf in unterschiedlichen Orientierungen und/oder Positionen.

Die Grundplatte in Kombination mit den gussteilabhängig montierten konturgebenden Formbauteilen und nicht-konturgebenden Werkzeugaufnahme-Modulbauteilen ersetzt bei der Erfindung den Formrahmen mit Einsatzteilen, wie er bei den oben erwähnten herkömmlichen Systemen benutzt wird, und unterscheidet sich davon in ihrer Fähigkeit, die konturgebenden Formbauteile und die nicht-konturgebenden Werkzeugaufnahme-Modulbauteile in mindestens zwei unterschiedlichen Konfigurationen halten zu können, sei es in zwei oder mehr unterschiedlichen Orientierungen bzw. Lagekonstellationen der gleichen konturgebenden Formbauteile und nicht-konturgebenden Werkzeugaufnahme-Modulbauteile, die zum Gießen eines bestimmten Gussteils benutzt werden, sei es in Konstellationen mit unterschiedlichen Sätzen von konturgebenden Formbauteilen und zugeordneten nicht-konturgebenden Werkzeugaufnahme-Modulbauteilen zum Gießen unterschiedlicher Gussteile. Im Gegensatz dazu ist bei den genannten herkömmlichen Systemen der Formrahmen in der Regel nur auf das Halten eines ganz bestimmten Satzes von Werkzeugkomponenten zum Gießen eines zugeordneten Gussteils ausgelegt, zum Gießen eines anderen Gussteils wird ein anderer Formrahmen mit anderen daran gehaltenen Werkzeugkomponenten bzw. Einsatzteilen benutzt.

Die Erfindung ermöglicht auf diese Weise einen effizienten und flexiblen Einsatz einer gleichen Grundplatte zum Gießen von unterschiedlichen Gussteilen und/oder zum Gießen eines Gussteils in jeweils optimal angepasster Lagekonfiguration bezogen auf die Orientierung des Druckgießwerkzeugs bzw. der Druckgießmaschine. Zudem kann zumindest ein Teil der nicht-konturgebenden Werkzeugaufnahme-Modulbauteile bei Bedarf modular zum Gießen unterschiedlicher Gussteile bzw. zum Gießen in unterschiedlichen Lageorientierungen des Gussteils bzw. der Gießkavität flexibel und effizient verwendet werden. Das Befestigungsraster lässt sich ohne weiteres derart konfigurieren, dass es eine relativ große Zahl von verschiedenen, gegeneinander verschobenen und/oder verdrehten Positionierungen des jeweiligen Satzes von konturgebenden Formbauteilen und des zugeordneten Satzes der Werkzeugaufnahme-Modulbauteile ermöglicht, ebenso die Verwendung von Sätzen konturgebender Formbauteile und zugeordneter Sätze von Werkzeugaufnahme-Modulbauteilen für Gussteile, die sich nicht nur in ihrer Größe unterscheiden oder in einer Symmetriebeziehung zueinander stehen, sondern von ganz unterschiedlicher Formgestalt sind.

In einer Weiterbildung der Erfindung ist das Befestigungsraster durch ein zweidimensionales Feld der Befestigungspunkte gebildet, bei dem die Befestigungspunkte in mehreren parallelen Reihen aufeinanderfolgend angeordnet sind, die voneinander in einer zu einer Reihenrichtung nicht-parallelen, d.h. senkrechten oder schrägen, Reihenabstandsrichtung beabstandet sind. Dies stellt eine vorteilhafte Belegung des Befestigungsbereichs mit den Befestigungspunkten dar, die eine hohe Flexibilität hinsichtlich der Montage der konturgebenden Formbauteile und der nicht-konturgebenden Werkzeugaufnahme-Modulbauteile an der Grundplatte ermöglicht. In einer alternativen Ausführung können die Befestigungspunkte z.B. in einem irregulären, zufallsverteilten Rastermuster angeordnet sein.

In einer Weiterbildung der Erfindung sind eine erste und eine zweite der wenigstens zwei unterschiedlichen Orientierungen um eine zur Grundplatte senkrechte Achse gegeneinander verdreht, die sich innerhalb des Befestigungsbereichs befindet. Dies stellt eine vorteilhafte Realisierung für die flexible Montierbarkeit der konturgebenden Formbauteile für ein jeweiliges Gussteil und des zugeordneten Satzes der Werkzeugaufnahme-Modulbauteile in unterschiedlichen Orientierungen an der Grundplatte dar. So können beispielsweise Schieberbauteile je nach dem zu gießenden Gussteil parallel zur Plattenebene der Grundplatte mit verschiedenen Verschieberichtungen relativ zur horizontalen bzw. vertikalen Maschinenrichtung angeordnet werden, um eine unter Beachtung aller Gießbedingungen optimale Lage bzw. Orientierung der Gießkavität zu ermöglichen. In einer alternativen Ausführung verläuft die besagte Verdreh-Achse außerhalb des Befestigungsbereichs.

In einer Weiterbildung der Erfindung gehört mindestens eines der nicht-konturgebenden Werkzeugaufnahme-Modulbauteile mindestens zweien der Sätze der Werkzeugaufnahme-Modulbauteile an. Dieser Erfindungsaspekt erhöht die Effizienz und Flexibilität des Druckgießwerkzeugsystems dadurch, dass das oder die betreffenden Werkzeugaufnahme-Modulbauteile zum Gießen nicht nur eines einzigen, bestimmten Gussteils verwendet werden können, sondern sich für das Gießen von zwei oder mehr unterschiedlichen Gussteilen verwenden lassen.

Als Extremfälle schließt dies die Möglichkeiten ein, dass alle nicht-konturgebenden Werkzeugaufnahme-Modulbauteile mindestens zwei Sätzen der Werkzeugaufnahme-Modulbauteile angehören, d.h. zum Gießen von zwei oder mehr verschiedenen Gussteilen verwendbar sind, und/oder eines oder mehrere der nicht-konturgebenden Werkzeugaufnahme-Modulbauteile allen Sätzen der Werkzeugaufnahme-Modulbauteile angehört, d.h. zum Gießen aller vorgegebenen unterschiedlichen Gussteile verwendbar sind.

**In** einer Weiterbildung der Erfindung gehört mindestens eines der nicht-konturgebenden Werkzeugaufnahme-Modulbauteile mindestens einem der Sätze der Werkzeugaufnahme-Modulbauteile nicht an. Diese Weiterbildung betrifft somit Fälle, bei denen nicht alle nicht-konturgebenden Werkzeugaufnahme-Modulbauteile für jedes von mehreren zu gießenden Gussteilen in Kombination mit den jeweiligen konturgebenden Formbauteilen verwendet bzw. benötigt werden.

**In** einer Weiterbildung der Erfindung umfassen die nicht-konturgebenden Werkzeugaufnahme-Modulbauteile mindestens ein Schieberbauteil und/oder mindestens ein Führungsbauteil und/oder mindestens ein Entlüftungsbauteil und/oder mindestens eine Zentrierplatte. Somit bildet in dieser Weiterbildung der Erfindung die betreffende Werkzeugkomponente, wie sie von ihrer Funktion her auch bei herkömmlichen Systemen verwendet wird, d.h. das oder die Schieberbauteile, das oder die Führungsbauteile, das oder die Entlüftungsbauteile und die eine oder mehreren Zentrierplatten, jeweils eines der nicht-konturgebenden Werkzeugaufnahme-Modulbauteile und lässt sich daher entsprechend modular zum Gießen verschiedener Gussteile und/oder in unterschiedlichen Orientierungen an der Grundplatte verwenden.

**In** einer Weiterbildung der Erfindung umfassen die nicht-konturgebenden Werkzeugaufnahme-Modulbauteile eine erste, maschinentypspezifische Gruppe von einem oder mehreren der Werkzeugaufnahme-Modulbauteile und eine zweite, maschinentypübergreifende Gruppe von einem oder mehreren der Werkzeugaufnahme-Modulbauteile. Dabei sind unter der maschinentypspezifischen Gruppe diejenigen nicht-konturgebenden Werkzeugaufnahme-Modulbauteile zu verstehen, die nur zur Verwendung bei einem bestimmten Typ bzw. einer bestimmten Maschinengröße der Druckgießmaschine bestimmt und ausgelegt sind. Unter der maschinentypübergreifenden Gruppe sind hingegen diejenigen nicht-konturgebenden Werkzeugaufnahme-Modulbauteile zu verstehen, die sich typ- bzw. größenübergreifend für verschiedene Typen bzw. Größen der Druckgießmaschine verwenden lassen und hierfür entsprechend ausgelegt sind. Die maschinentypübergreifende Verwendbarkeit dieser zweiten Gruppe der Werkzeugaufnahme-Modulbauteile erhöht weitergehend die Modularität und damit die Flexibilität des Druckgießwerkzeugsystems.

**In** einer Ausgestaltung der Erfindung gehört zu der ersten Gruppe von nichtkonturbildenden Werkzeugaufnahme-Modulbauteilen das mindestens eine Führungsbauteil und/oder das mindestens eine Entlüftungsbauteil und/oder die mindestens eine Zentrierplatte. Diese Bauteilgruppe lässt sich wie die Grundplatte maschinenbezogen festlegen bzw. konfigurieren.

**In** einer Ausgestaltung der Erfindung gehört zu der zweiten Gruppe von nichtkonturbildenden Werkzeugaufnahme-Modulbauteilen das mindestens eine Schieberbauteil. Diese Ausgestaltung bietet beispielsweise eine günstige Voraussetzung für einen maschinentypübergreifenden Einsatz eines oder mehrerer Schieberbauteile zum Gießen von Teilen in Druckgießmaschinen unterschiedlichen Typs bzw. unterschiedlicher Maschinengröße, wozu das Schieberbauteil an der für die jeweilige Druckgießmaschine konfigurierten Grundplatte befestigt werden kann.

**In** einer Weiterbildung der Erfindung bildet der einzig vorhandene Satz von konturgebenden Formbauteilen oder mindestens einer der mehreren vorhandenen Sätze von konturgebenden Formbauteilen einen Formeinsatz, der zur Montage als Baueinheit an der Befestigungsseite der Grundplatte eingerichtet ist und auf seiner der Grundplatte zugewandten Rückseite eine auswerferbezogene Ausnehmung aufweist. **In** der auswerferbezogenen Ausnehmung dieses Formeinsatzes ist eine Auswerferplatteneinheit axialbeweglich aufnehmbar, mit der ein oder mehrere Auswerferstifte bewegungsgekoppelt sind und die durch eine Auswerferkoppeleinheit mit einer grundplattenseitigen Auswerferplattenaktuatoreinheit lösbar koppelbar ist.

Durch diese Konfiguration können das oder die konturgebenden Formbauteile des betreffenden Satzes, der an der Grundplatte zum Gießen eines zugehörigen Gussteils montiert werden soll, vorab als Baueinheit hergerichtet werden, d.h. bei einer Mehrzahl von konturgebenden Formbauteilen können diese zu der entsprechenden Baueinheit zusammengesetzt bzw. durch Vormontage aneinander gehalten werden, bevor sie als so gebildete Baueinheit an der Grundplatte befestigt werden.

Die dergestalt als Formeinsatz fungierende Baueinheit weist an ihrer bei der Montage der Grundplatte bzw. deren Befestigungsseite zugewandten Seite, d.h. der Rückseite, die auswerferbezogene Ausnehmung auf, deren Bezeichnung darauf hinweisen soll, dass sie sich auf das Aufnehmen einer Auswerferkomponente bezieht. Speziell ist in ihr die erwähnte Auswerferplatteneinheit axialbeweglich aufnehmbar, wobei die Auswerferplatteneinheit bei der Montage dieses Formeinsatzes aus dem Satz von konturgebenden Formbauteilen an der Grundplatte lösbar mit der grundplattenseitigen Auswerferplattenaktuatoreinheit gekoppelt wird. Die Auswerferplattenaktuatoreinheit dient, wie der Name sagt, als Aktuatoreinheit zur Betätigung der Auswerferplatteneinheit und befindet sich in an sich bekannter Weise auf Seiten der Grundplatte, typsicherweise hinter einer Rückseite derselben. Über die axialbewegliche Auswerferplatteneinheit können der oder die Auswerferstifte durch die Aktuatoreinheit in der gewünschten, ebenfalls an sich bekannten Weise betätigt werden.

Insgesamt begünstigt diese Weiterbildung der Erfindung die Erzielung kurzer Rüstzeiten für die Druckgießmaschine, insbesondere auch für einen Wechsel des Satzes der konturgebenden Formbauteile, wenn ein Gussteil anderer Form und/oder Größe gegossen werden soll. In alternativen Ausführungen kommt in Betracht, die konturgebenden Formbauteile einzeln an der Grundplatte zu montieren und/oder die Auswerferplatteneinheit in einer Ausnehmung der Grundplatte zu montieren.

**In** einer Ausgestaltung der Erfindung ist die Auswerferplatteneinheit an der Baueinheit des Formeinsatzes vormontiert gehalten. Somit ermöglicht es diese Realisierung in sehr vorteilhafter Weise, die Auswerferplatteneinheit in die Baueinheit des zu montierenden Satzes von konturgebenden Formbauteilen zu integrieren und den Satz von konturgebenden Formbauteilen als Baueinheit zusammen mit der darin integrierten Auswerferplatteneinheit an der Grundplatte zu montieren. Dies ermöglicht die Montage der Auswerferplatteneinheit an der Grundplatte in einem Montagevorgang zusammen mit der von dem oder den konturgebenden Formbauteilen gebildeten Formeinsatz-Baueinheit und trägt dadurch weitergehend zur Erzielung kurzer Rüstzeiten bei einem Wechsel des Druckgießwerkzeugs bei. Alternativ kann die Auswerferplatteneinheit separat von den konturgebenden Formbauteilen an der Grundplatte montiert werden, z.B. vor der Montage des bzw. der konturgebenden Formbauteile.

In einer Ausgestaltung der Erfindung beinhaltet das Druckgießwerkzeugsystem eine ansteuerbare Haltebolzeneinheit zur lösbaren Befestigung des Formeinsatzes an der Befestigungsseite der Grundplatte. Die Verwendung der ansteuerbaren Haltebolzeneinheit ermöglicht eine entsprechende Automatisierung der Montage der Formeinsatz-Baueinheit an der Grundplatte mittels entsprechender Ansteuerung dieser Haltebolzeneinheit. Alternativ kann die Montage der Formeinsatz-Baueinheit von Hand erfolgen, d.h. unter Verwendung entsprechender manuell handzuhabender Befestigungsmittel.

In einer Ausgestaltung der Erfindung sind das mindestens eine Schieberbauteil und der zugehörige Satz von konturgebenden Formbauteilen dafür eingerichtet, das Schieberbauteil an dem oder den zugehörigen Formbauteilen lösbar vormontiert zu halten. Dies ermöglicht eine vorteilhafte Vormontage des oder der zum zugeordneten Satz von konturgebenden Formbauteilen gehörigen Schieberbauteile an dem oder den Formbauteilen des betreffenden Satzes, was eine eigenständige Montage des oder der Schieberbauteile an der Grundplatte überflüssig macht. Stattdessen kann die aus dem Satz von konturgebenden Formbauteilen und dem oder den daran vormontierten Schieberbauteilen gebildete bauliche Einheit als Ganzes an der Grundplatte montiert werden. Dies trägt zur Erzielung kurzer Rüstzeiten insbesondere auch beim Wechseln des Druckgießwerkzeugs für ein anderes zu gießendes Gussteil bei. Alternativ können das oder die Schieberbauteile zusätzlich auch eigens an der Grundplatte festgelegt oder ohne Vormontage am Satz konturgebender Formbauteile an der Grundplatte befestigt werden.

Vorteilhafte Ausführungsformen der Erfindung sind in den Zeichnungen dargestellt. Diese und weitere Ausführungsformen der Erfindung werden nachfolgend näher beschrieben. Hierbei zeigen:
- Fig. 1: eine schematische Blockdiagrammdarstellung eines Druckgießwerkzeugsystems,
- Fig. 2: eine schematische Längsschnittansicht eines Druckgießwerkzeugsystems nach Art von Fig. 1 mit ausgewählt montierten Komponenten zum Gießen eines bestimmten Gussteils,
- Fig. 3: eine schematische Draufsicht auf das Druckgießwerkzeugsystem von Fig. 2 in einer ersten Orientierung von konturgebenden Formbauteilen und nicht-konturgebenden Werkzeugaufnahme-Modulbauteilen an einer Grundplatte,
- Fig. 4: die Ansicht von Fig. 3 für eine Variante in einer zweiten, gegenüber der ersten verdrehten Orientierung der konturgebenden Formbauteile und nicht-konturgebenden Werkzeugaufnahme-Modulbauteile an der Grundplatte,
- Fig. 5: eine schematische Perspektivansicht der Variante von Fig. 4,
- Fig. 6: eine Draufsicht auf eine Befestigungsseite einer Grundplatte, wie sie z.B. für die Varianten der Fig. 3 und 4 verwendbar ist,
- Fig. 7: eine schematische Längsschnittansicht eines einer beweglichen Formhälfte zugeordneten Teils eines Druckgießwerkzeugsystems nach Art von Fig. 1 in einer Ausführung mit in einem Formeinsatz aufnehmbarer Auswerferplatteneinheit mit ausgewählt montierten Komponenten und
- Fig. 8: eine schematische, hälftige Längsschnittansicht eines Druckgießwerkzeugsystems nach Art von Fig. 1 in einer schiebervormontierbaren Ausführung mit ausgewählt montierten Komponenten.

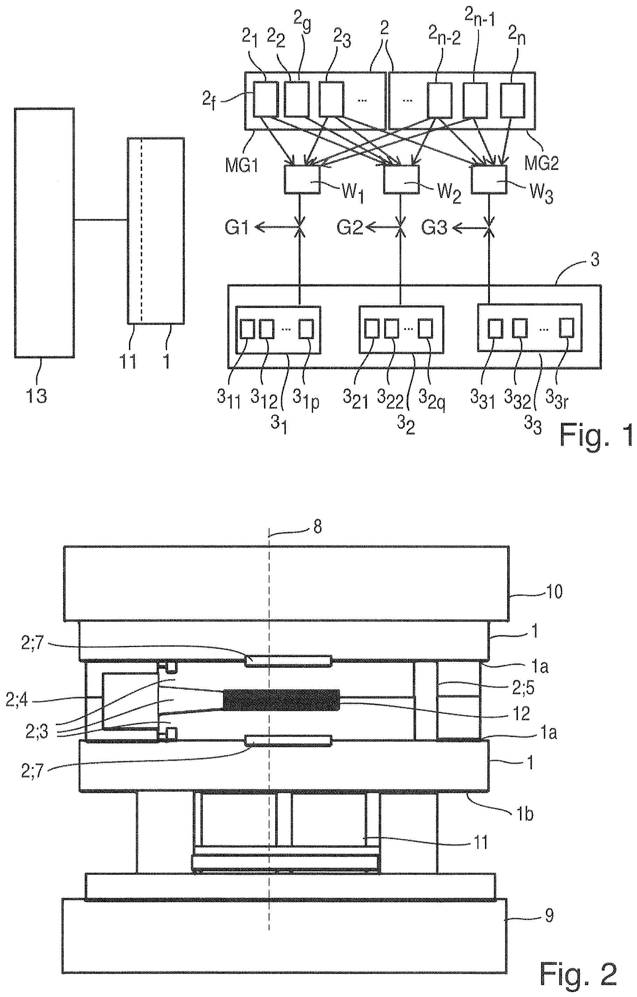

Im Folgenden wird anhand der Fig. 1 bis 8 auf dort speziell gezeigte und andere Ausprägungen des erfindungsgemäßen Druckgießwerkzeugsystems näher eingegangen. Das Druckgießwerkzeugsystem ist zur Verwendung bei einer in Fig. 1 schematisch angedeuteten Druckgießmaschine 13 bestimmt und eingerichtet, die zum Gießen von Gussteilen mittels Druckgusstechnik dient. Bei der Druckgießmaschine 13 kann es sich insbesondere um eine Metalldruckgiessmaschine, z.B. vom Kaltkammer- oder Warmkammertyp, zum Druckgießen von Gussteilen aus Aluminium, Magnesium, Zink oder einem anderen üblichen Gießmetallmaterial handeln, alternativ um eine Kunststoffspritzgießmaschine zur Herstellung von Gussteilen aus Kunststoffmaterial mittels Spritzgießtechnik. Die Druckgießmaschine 13 kann hierbei von irgendeinem an sich bekannten Maschinentyp bzw. Maschinenaufbau und von einer an sich bekannten Maschinengröße sein, wobei vorliegend nur auf die erfindungsspezifischen Besonderheiten des Druckgießwerkzeugsystems eingegangen werden braucht, während im Übrigen bezüglich anderweitiger Details der Druckgießmaschine 13 auf das Fachwissen und den Stand der Technik verwiesen werden kann. Dabei kann je nach Systemausführung das erfindungsgemäße Druckgießwerkzeugsystem bei Bedarf wahlweise auch für unterschiedliche Typen und/oder Maschinengrößen der Druckgießmaschine 13 verwendet werden. Wie üblich, beinhaltet die Druckgießmaschine 13 eine bewegliche Formhälfte 9 und eine unbewegliche Formhälfte 10, an denen bzw. zwischen denen das Druckgießwerkzeugsystem angeordnet ist, wie aus Fig. 2 ersichtlich.

Wie in Fig. 1 blockdiagrammatisch veranschaulicht, beinhaltet das dort gezeigte Druckgießwerkzeugsystem eine maschinenbezogen ausgeführte Grundplatte 1, d.h. die Grundplatte 1 ist zur Verwendung bzw. zur Montage an der Druckgießmaschine 13 eingerichtet, für die das Druckgießwerkzeugsystem bestimmt ist. Weiter beinhaltet das Druckgießwerkzeugsystem mindestens einen ersten Satz 3₁ einer Mehrzahl 3₁₁ bis 3₁ₚ von konturgebenden Formbauteilen 3, mit p als einer beliebigen natürlichen Zahl größer als eins, und eine Mehrzahl 2₁ bis 2ₙ von nicht-konturgebenden Werkzeugaufnahme-Modulbauteilen 2, mit n als einer beliebigen natürlichen Zahl größer als eins. Je nach dem zu gießenden Gussteil variieren die Anzahl p und die Gestalt der den betreffenden Satz 3₁ bildenden konturgebenden Formbauteile 3₁₁ bis 3₁ₚ. Das oder die konturgebenden Formbauteile 3 bilden hierbei zusammen einen dementsprechend vorliegend mit dem gleichen Bezugszeichen benannten Formeinsatz 3 bzw. entsprechen in ihrer Gesamtheit dem vom Fachmann herkömmlich so verstandenen Formeinsatz.

Die Grundplatte 1, die konturgebenden Formbauteile bzw. der von diesen gebildete Formeinsatz 3 und die nicht-konturgebenden Werkzeugaufnahme-Modulbauteile 2 sind dafür eingerichtet, den jeweiligen Satz 3₁ von konturgebenden Formbauteilen 3 und einen zugeordneten Satz W₁ von aus der Gesamtheit 2₁ bis 2ₙ der nicht-konturgebenden Werkzeugaufnahme-Modulbauteile 2 ausgewählten Werkzeugaufnahme-Modulbauteilen lösbar an der Grundplatte 1, genauer gesagt an einer hierzu dienenden Befestigungsseite 1a der Grundplatte 1, wie z.B. aus jeder der Fig. 2 bis 8 ersichtlich, zu montieren, um mit dem Druckgießwerkzeugsystem ein entsprechendes Gussteil zu gießen. Dazu bildet der betreffende Satz 3₁ von konturgebenden Formbauteilen 3₁₁ bis 3₁ₚ in einer Montageposition an der Grundplatte 1 eine Gießkontur 12 für das zu gießende Gussteil. Eine spezielle Ausführung der Gießkontur 12 ist beispielhaft in den Fig. 2 bis 5 schematisch gezeigt.

Es versteht sich, dass die Grundplatte 1 sowie ein an ihr bzw. ihrer Befestigungsseite 1a montierter Satz von konturgebenden Formbauteilen 3 und ein an ihr bzw. ihrer Befestigungsseite 1a montierter, zugehöriger Satz der nicht-konturgebenden Werkzeugaufnahme-Modulbauteile 2 in der Regel je ein Mal für jede der beiden Formhälften 9, 10 der Druckgießmaschine 13 beim Druckgießwerkzeugsystem vorhanden sind, wie aus der Querschnittansicht im Ausführungsbeispiel von Fig. 2 zu erkennen. Dabei ist der auf Seite der beweglichen Formhälfte 9 befindlichen Grundplatte 1 typischerweise ein z.B. in Fig. 2 schematisch angedeuteter Auswerfermechanismus 11 zugeordnet, wie er dem Fachmann an sich bekannt ist, was daher hier keiner näheren Erläuterungen bedarf.

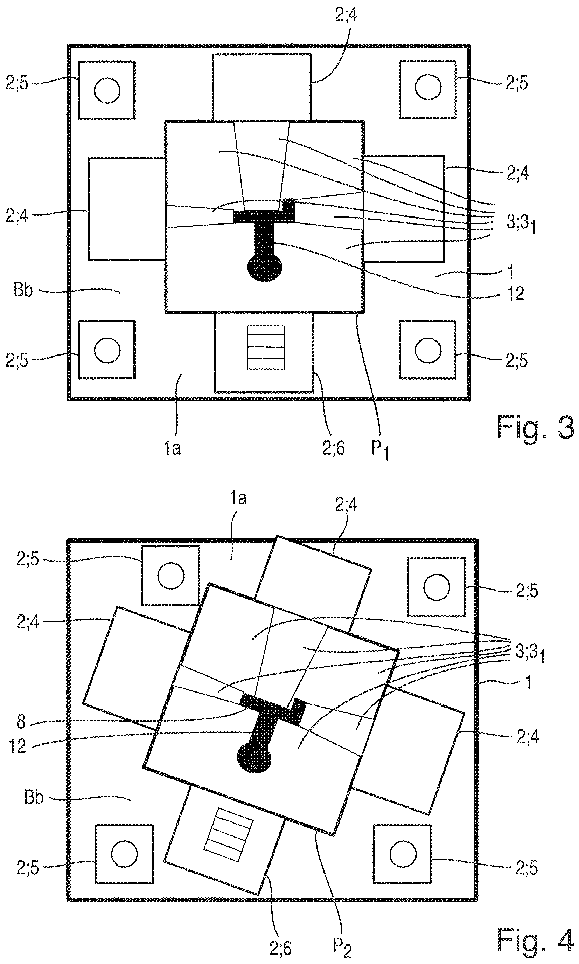

Die Grundplatte 1 beinhaltet auf ihrer Befestigungsseite 1a ein Befestigungsraster aus einer Mehrzahl von in einem regelmäßigen oder unregelmäßigen Muster über einen Befestigungsbereich Bb hinweg verteilt angeordneten Befestigungspunkten 14, insbesondere Befestigungsbohrungen, wie aus den Fig. 3 bis 6 ersichtlich, wobei die Befestigungspunkte 14 in den Ansichten der Fig. 3 und 4 der Einfachheit halber nicht gezeichnet sind. Im gezeigten Beispiel erstreckt sich der Befestigungsbereich Bb über im Wesentlichen die gesamte Ausdehnung der Befestigungsseite 1a, alternativ erstreckt er sich nur über einen Teilbereich derselben, z.B. nur über einen mittleren Flächenbereich der Befestigungsseite 1a mit einer Flächenausdehnung von z.B. höchstens 50 bis 80% der Fläche der Befestigungsseite 1a. Die Befestigungsbohrungen 14 können Befestigungsbolzen oder andere herkömmlich zu Befestigungszwecken bei Druckgießwerkzeugen benutzte Befestigungsmittel aufnehmen.

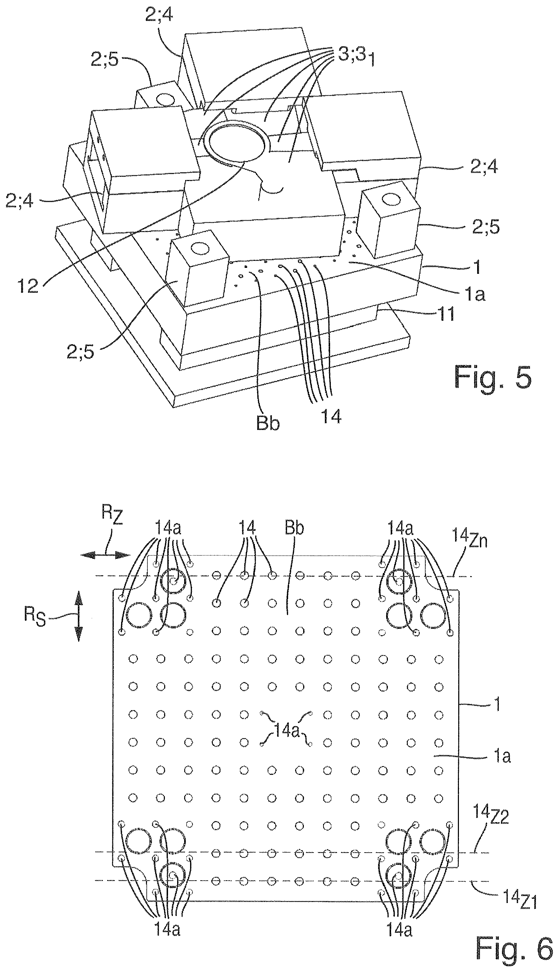

In entsprechenden Ausführungsformen des erfindungsgemäßen Druckgießwerkzeugsystems sind die konturgebenden Formbauteile 3₁₁ bis 3₁ₚ des einzigen, ersten Satzes 3₁ von konturgebenden Formbauteilen 3 bzw. wenigstens des ersten Satzes 3₁ von mehreren Sätzen 3₁, 3₂, ... von konturgebenden Formbauteilen 3 und der zugeordnete Satz W₁ der nicht-konturgebenden Werkzeugaufnahme-Modulbauteile 2 in wenigstens zwei unterschiedlichen Orientierungen und/oder in wenigstens zwei verschobenen Positionen an der Grundplatte 1 montierbar. Dazu veranschaulichen die Fig. 2 und 3 eine erste Montagevariante und die Fig. 4 und 5 eine zweite Montagevariante, bei denen sich eine erste Orientierung P₁, wie sie besonders aus Fig. 3 ersichtlich ist, von einer zweiten Orientierung P₂ unterscheidet, wie sie aus den Fig. 4 und 5 zu erkennen ist. Mit Orientierung ist hierbei die räumliche Lage und insbesondere die Drehlage der konturgebenden Formbauteile 3 und des zugeordneten Satzes W₁ der nicht-konturgebenden Werkzeugaufnahme-Modulbauteile 2 relativ zur Grundplatte 1 gemeint.

Die besagten unterschiedlichen Orientierungen P₁, P₂ bzw. Positionierungen sind hierbei so zu verstehen, dass zumindest eine der an der Grundplatte 1 zu montierenden Komponenten, d.h. der konturgebenden Formbauteile 3 und der nicht-konturgebenden Werkzeugaufnahme-Modulbauteile 2, in entsprechend unterschiedlicher Orientierung bzw. verschobener Positionierung an der Grundplatte 1 angeordnet werden kann, wobei alle übrigen Komponenten je nach Bedarf und Anwendungsfall jeweils für sich genommen ebenfalls unterschiedlich orientiert bzw. positioniert oder in gleicher Orientierung bzw. Position an der Grundplatte 1 montiert werden können. In der Regel ist die unterschiedliche Orientierung bzw. Position zumindest für die konturgebenden Formbauteile 3 realisiert, um die von diesen gebildete Gießkontur 12 in entsprechend unterschiedlicher Orientierung bzw. Position an der Grundplatte 1 zu bilden. Vielfach sind zudem eines oder mehrere der nicht-konturgebenden Werkzeugaufnahme-Modulbauteile 2 in unterschiedlicher Orientierung bzw. Position an der Grundplatte 1 montierbar.

Die konturgebenden Formbauteile 3 sind individuell auf das zu gießende Gussteil abgestimmt, während die nicht-konturgebenden Werkzeugaufnahme-Modulbauteile 2 die Gießkontur 12 für das zu gießende Gussteil nicht mitbestimmen und daher je nach Systemausführung variabel und flexibel für die Zusammenstellung eines gesamten Werkzeugaufbaus für das jeweilige Gussteil herangezogen werden können. Dabei werden die zum Gießen des jeweiligen Gussteils verwendeten Werkzeugaufnahme-Modulbauteile zur Bildung des betreffenden Satzes W₁ geeignet aus der Gesamtheit 2₁ bis 2ₙ aller nicht-konturgebenden Werkzeugaufnahme-Modulbauteile 2 ausgewählt. Die nicht-konturgebenden Werkzeugaufnahme-Modulbauteile 2 können u.a. dazu dienen, die sichere Halterung der konturgebenden Formbauteile 3 an der Grundplatte zu unterstützen, z.B. durch geeignete formschlüssige und/oder kraftschlüssige Verbindungen zwischen den nicht-konturgebenden Werkzeugaufnahme-Modulbauteilen einerseits und den konturgebenden Formbauteilen 3 andererseits, so dass die benötigte Festigkeit und Formstabilität der an der Grundplatte modular montierten Werkzeugkomponenten einschließlich der konturgebenden Formbauteile 3 gegenüber den beim Gießvorgang auftretenden Druckbelastungen sichergestellt ist.

Wie bereits erwähnt, sind in entsprechenden Ausführungsformen der Erfindung mehrere Sätze 3₁, ... von konturgebenden Formbauteilen 3₁₁ bis 3₁ₚ, ... zur wahlweisen Montage an der Grundplatte 1 mit je einem zugeordneten Satz W₁, ... von aus der Gesamtheit 2₁ bis 2ₙ der nicht-konturgebenden Werkzeugaufnahme-Modulbauteile 2 ausgewählten Werkzeugaufnahme-Modulbauteilen vorhanden, so dass mit dem Druckgießwerkzeugsystem eine entsprechende Mehrzahl von unterschiedlichen Gussteilen unter Verwendung der gleichen Grundplatte 1 gegossen werden kann. In Fig. 1 ist diesbezüglich eine Systemausführung gezeigt, die zusätzlich zu dem ersten Satz 3₁ von konturgebenden Formbauteilen 3₁₁ bis 3₁ₚ zwei weitere Sätze 3₂, 3₃ von konturgebenden Formbauteilen 3₂₁ bis 3_{2q} bzw. 3₃₁ bis 3₃ᵣ, mit q und r als beliebige natürliche Zahl größer als eins, zur wahlweisen Montage an der Grundplatte 1 mit je einem zugeordneten Satz W₁, W₂, W₃ der Werkzeugaufnahme-Modulbauteile 2 zum Gießen eines ersten Gussteils G1, eines zweiten Gussteils G2 bzw. eines dritten Gussteils G3 beinhaltet. In anderen Ausführungen umfasst das Druckgießwerkzeugsystem nur einen oder zwei Sätze, z.B. die Sätze 3₁ und 3₂, oder mehr als drei Sätze von konturgebenden Formbauteilen 3 und jeweils eine entsprechende Anzahl von zugeordneten Sätzen W₁, ... der Werkzeugaufnahme-Modulbauteile 2.

In vorteilhaften Ausführungsformen ist das Befestigungsraster, wie im gezeigten Beispiel von Fig. 6, durch ein zweidimensionales Feld der Befestigungspunkte 14 gebildet, bei dem die Befestigungspunkte 14 in mehreren, in einer Reihenrichtung R_{Z} parallel verlaufenden Reihen 14_{Z1}, 14_{Z2}, ..., 14_{Zn} voneinander beabstandet angeordnet sind, wobei die Reihen 14_{Z1}, 14_{Z2}, ..., 14_{Zn} voneinander in einer zur Reihenrichtung R_{Z} nicht-parallelen Reihenabstandsrichtung R_{S} beabstandet sind. Wie aus den Fig. 5 und 6 zu erkennen, sind im gezeigten Beispiel die Reihenrichtung R_{Z} und die Reihenabstandsrichtung R_{S} speziell senkrecht zueinander, d.h. die Befestigungspunkte 14 sind quasi in Zeilen und Spalten angeordnet. Im gezeigten Beispiel sind die Befestigungspunkte 14 je zweier benachbarter Reihen mittig versetzt, d.h. um etwa ihren halben Abstand in Reihenrichtung R_{Z} versetzt, angeordnet. In alternativen Ausführungen verlaufen die Reihenrichtung R_{Z} und die Reihenabstandsrichtung R_{S} schräg zueinander, und/oder die Befestigungspunkte 14 je zweier benachbarter Reihen sind nicht oder jedenfalls nicht mittig versetzt angeordnet. Optional können zusätzliche Befestigungspunkte 14, wie in Fig. 6 exemplarisch gezeigte Befestigungspunkte 14a, zusätzlich zu bzw. außerhalb der erwähnten Reihen nach Bedarf vorgesehen sein. Ebenso können optional einige der in Fig. 6 gezeigten Befestigungspunkte 14 in einer oder mehreren der Reihen fehlen, d.h. die Befestigungspunkte 14 brauchen nicht zwingend alle in einem gleichen Abstand voneinander innerhalb einer jeweiligen Reihe angeordnet sein.

Die Montage der diversen Komponenten an der Grundplatte 1 kann beispielsweise unter Verwendung von Schraubverbindungen erfolgen, wozu die Grundplatte 1 in entsprechenden Realisierungen mit einem regelmäßigen oder unregelmäßigen Muster an Befestigungsbohrungen versehen ist, die Schraubbolzen oder ähnliche Befestigungsbolzen aufnehmen können, mit denen dann die jeweilige Werkzeugkomponente an der Grundplatte 1 lösbar in der gewünschten Lage bzw. Orientierung befestigt wird.

In entsprechenden Ausführungen des erfindungsgemäßen Druckgießwerkzeugsystems sind mindestens zwei Sätze 3₁, 3₂ von konturgebenden Formbauteilen 3 und dementsprechend mindestens zwei zugeordnete Sätze W₁, W₂, ... aus der Gesamtheit 2₁ bis 2ₙ der nicht-konturgebenden Werkzeugaufnahme-Modulbauteile 2 derart vorhanden, dass mindestens eines der nicht-konturgebenden Werkzeugaufnahme-Modulbauteile 2 mindestens zweien der Sätze W₁, W₂, ...der nicht-konturgebenden Werkzeugaufnahme-Modulbauteile 2₁ bis 2ₙ angehört. So veranschaulicht Fig. 1 beispielhaft einen Fall, bei dem ein nicht-konturgebendes Werkzeugaufnahme-Modulbauteil 2_{f} in Form des Modulbauteils 2₁ dem zum Gießen des ersten Gussteils G1 verwendeten Satz W₁ und dem zum Gießen des zweiten Gussteils G2 verwendeten Satz W₂ der nicht-konturgebenden Werkzeugaufnahme-Modulbauteile 2 angehört. Ähnlich gehört das Modulbauteil 2ₙ₋₁ dem ersten und dem dritten Satz W₁, W₃ der nicht-konturgebenden Werkzeugaufnahme-Modulbauteile 2 zum Gießen des ersten bzw. dritten Gussteils G1, G3 an, und die Modulbauteile 2₃ und 2ₙ₋₂ gehören jeweils allen drei Sätzen W₁, W₂, W₃ der nicht-konturgebenden Werkzeugaufnahme-Modulbauteile 2 zum Gießen des ersten, zweiten bzw. dritten Gussteils G1, G2, G3 an.

In entsprechenden Ausführungen gehört mindestens ein nicht-konturgebendes Werkzeugaufnahme-Modulbauteil mindestens einem der Sätze W₁, W₂, W₃ der Werkzeugaufnahme-Modulbauteile 2 zum Gießen eines jeweils zugehörigen Gussteils nicht an. So gehört in Fig. 1 ein Modulbauteil 2_{g} in Form des Modulbauteils 2₂ dem zum Gießen des ersten Gussteils G1 verwendeten Satz W₁ der nicht-konturgebenden Werkzeugaufnahme-Modulbauteile 2 nicht an, auch nicht dem dritten Satz W₃, sondern nur dem zweiten Satz W₂. Analog gehören im exemplarischen Beispiel von Fig. 1 das Modulbauteil 2₁ nur dem ersten und zweiten Satz W₁, W₂ und nicht dem dritten Satz W₃ an, das Modulbauteil 2ₙ₋₁ gehört nur dem ersten und dritten Satz W₁, W₃, aber nicht dem zweiten Satz W₂ an, und das Modulbauteil 2₂ gehört nur dem dritten Satz W₃, aber nicht dem ersten und zweiten Satz W₁, W₂ der Werkzeugaufnahme-Modulbauteile 2 an.

In entsprechenden Ausführungen umfasst die Gesamtheit 2₁ bis 2ₙ an nicht-konturgebenden Werkzeugaufnahme-Modulbauteilen 2 mindestens ein Schieberbauteil 4 und/oder mindestens ein Führungsbauteil 5 und/oder mindestens ein Entlüftungsbauteil 6 und/oder mindestens eine Zentrierplatte 7. In den Fig. 2 bis 5 sind beispielhaft Realisierungen illustriert, bei denen als nicht-konturgebende Werkzeugaufnahme-Modulbauteile mehrere Schieberbauteile 4, mehrere Führungsbauteile 5, ein Entlüftungsbauteil 6 und mehrere Zentrierplatten 7 verwendet werden.

Dabei sind in entsprechenden Ausführungen an jeder der beiden Grundplatten 1 für die bewegliche Formhälfte 9 und die feste Formhälfte 10 jeweils mindestens eine Zentrierplatte 7 und eine Mehrzahl der konturgebenden, zum betreffenden Gussteil gehörigen Formbauteile 3 montiert, wie im Beispiel von Fig. 2 ersichtlich. Oftmals sind auch jeweils eines oder mehrere der Schieberbauteile 4 an jeder der beiden Grundplatten 1 montiert, ebenso jeweils eines oder mehrere der Führungsbauteile 5.

In vorteilhaften Realisierungen des Druckgießwerkzeugsystems umfasst die Gesamtheit 2₁ bis 2ₙ an nicht-konturgebenden Werkzeugaufnahme-Modulbauteilen 2 eine erste, maschinentypspezifische Gruppe MG1 von einem oder mehreren der nicht-konturgebenden Werkzeugaufnahme-Modulbauteile 2 und eine zweite, maschinentypübergreifende Gruppe MG2 von einem oder mehreren der nicht-konturgebenden Werkzeugaufnahme-Modulbauteile 2. Fig. 1 veranschaulicht ein Beispiel mit jeweils mehreren der nicht-konturgebenden Werkzeugaufnahme-Modulbauteile 2 in jeder der beiden Gruppen MG1, MG2. Zur maschinentypspezifischen Gruppe MG1 gehören diejenigen nicht-konturgebenden Werkzeugaufnahme-Modulbauteile, die speziell zur Verwendung für einen bestimmten Maschinentyp bzw. eine bestimmte Maschinengröße der Druckgießmaschine 13 ausgelegt sind. Zur maschinentypübergreifenden Gruppe MG2 gehören diejenigen nicht-konturgebenden Werkzeugaufnahme-Modulbauteile, die sich zur Verwendung bei zwei oder mehr unterschiedlichen Maschinentypen oder Maschinengrößen der Druckgießmaschine 13 verwenden lassen, wozu sie insbesondere dafür ausgelegt sind, an deren jeweiliger Grundplatte 1 montiert zu werden und den jeweiligen Gießbedingungen zu genügen, z.B. den jeweiligen Druckbelastungen während des Gießvorgangs standzuhalten.

In entsprechenden Realisierungen gehören die einen oder mehreren Führungsbauteile 5 und/oder das oder die Entlüftungsbauteile 6 und/oder die eine oder mehreren Zentrierplatten 7 zur maschinentypspezifischen Gruppe MG1 der nicht-konturgebenden Werkzeugaufnahme-Modulbauteile 2, und/oder das oder die Schieberbauteile 4 gehören zu der maschinentypübergreifend verwendbaren Gruppe MG2 der nicht-konturgebenden Werkzeugaufnahme-Modulbauteile 2.

Wie speziell anhand der Fig. 3 bis 5 ersichtlich, sind bei den dort gezeigten beiden Systemvarianten mit unterschiedlichen Montageorientierungen die beiden unterschiedlichen Orientierungen P₁, P₂, in denen insbesondere die konturgebenden Formbauteile 3 an der Grundplatte 1 montiert sind, gegeneinander um eine zur Grundplatte 1 senkrechte Achse 8 verdreht. Vorzugsweise befindet sich die Achse 8, wie im gezeigten Beispiel, innerhalb des Befestigungsbereichs Bb, wie aus den Fig. 2 und 4 ersichtlich. Im Fall von Fig. 3 ist die Orientierung P₁ parallel zu den Seiten der Grundplatte 1 und damit parallel zur horizontalen bzw. vertikalen Maschinenrichtung der Druckgießmaschine 13 ausgerichtet, im Fall der Fig. 4 und 5 ist die Orientierung P₂ zumindest der konturgebenden Formbauteile 3 schräg zu den Seiten der Grundplatte 1. Dies kann bei Bedarf dazu genutzt werden, die Gießkontur 12 zur Optimierung der relevanten Gießparameter in einer günstigsten räumlichen Lage an der Grundplatte 1 zu bilden, indem der zugehörige Satz 3₁, 3₂, ... von konturgebenden Formbauteilen 3₁₁ bis 3₁ₚ, 3₂₁ bis 3_{2q}, ... entsprechend montiert wird. Zudem können dabei beispielsweise auch die Verschieberichtungen von Schieberführungen der Schieberbauteile 4 passend zur Gestalt des zu gießenden Gussteils G1, G2, ...bzw. der Gießkontur 12 optimal gewählt werden, indem die Schieberbauteile 4 in der entsprechenden Orientierung an der Grundplatte 1 montiert werden.

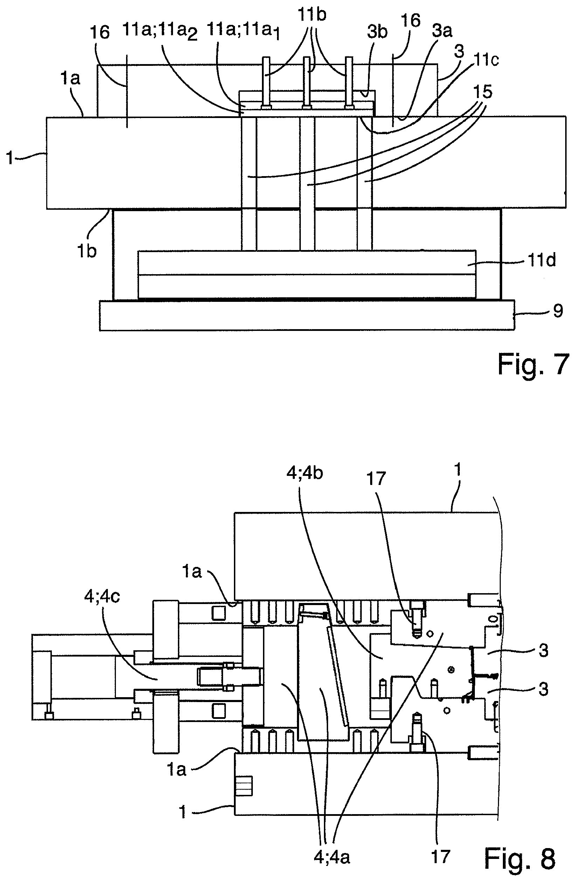

In vorteilhaften Ausführungsformen bildet mindestens einer der Sätze 3₁ von konturgebenden Formbauteilen 3₁₁ bis 3₁ₚ einen Formeinsatz 3, der zur Montage als Baueinheit an der Befestigungsseite 1a der Grundplatte 1 eingerichtet ist und auf seiner der Grundplatte 1 zugewandten Rückseite 3a eine auswerferbezogene Ausnehmung 3b aufweist, wobei es sich in diesem Fall typischerweise um die für die bewegliche Formhälfte vorgesehene Grundplatte 1 handelt, da dort üblicherweise das Auswerfen des Gussteils stattfindet, wie bereits oben zum Auswerfermechanismus 11 erwähnt. Eine derartige Ausführung ist in Fig. 7 dargestellt. In der auswerferbezogenen Ausnehmung 3b dieses Formeinsatzes 3 ist eine Auswerferplatteneinheit 11a axialbeweglich aufnehmbar, mit der ein oder mehrere Auswerferstifte 11b bewegungsgekoppelt sind.

Die Auswerferplatteneinheit 11a ist durch eine Auswerferkoppeleinheit 11c mit einer grundplattenseitigen Auswerferplattenaktuatoreinheit 11d lösbar koppelbar. Dies bedeutet, dass die Auswerferplatteneinheit 11a und damit der oder die Auswerferstifte 11b bei an der Grundplatte 1 montiertem Formeinsatz 3 lösbar mit der Auswerferplattenaktuatoreinheit 11d gekoppelt sind und dadurch von der Auswerferplattenaktuatoreinheit 11d zum Ausführen der gewünschten axialen Auswerferbewegung angetrieben werden können, was dem zu Fig. 2 erwähnten Auswerfermechanismus 11 entspricht.

Die auswerferbezogene Ausnehmung 3b kann auch als sogenannter Auswerferkasten bezeichnet werden und enthält alle zum Auswerfen des Gussteils notwendigen Auswerferkomponenten, wozu für die Axialbewegung ein zum zuverlässigen Ausstoßen des Gussteils ausreichender Axialbewegungshub vorgesehen ist. Die Auswerferstifte 11b sind im gezeigten Beispiel mit einem pilzförmigen Kopfende zwischen zwei dünnen, die Auswerferplatteneinheit 11a bildenden Auswerferplatten 11a₁, 11a₂ fixiert. Dadurch wird in einfacher Weise ermöglicht, dass sich bei einer Mehrzahl von Auswerferstiften 11b, wie im gezeigten Beispiel, alle Auswerferstifte 11b gleichzeitig axial verschieben lassen.

Die Auswerferkoppeleinheit 11c ist in einer dem Fachmann an sich geläufigen Weise realisiert, was hier keiner näheren Erläuterung bedarf, und ermöglicht die gewünschte Kopplung der Auswerferplatteneinheit 11a an die Auswerferplattenaktuatoreinheit 11d während der Montage des Formeinsatzes 3 an der Grundplatte 1. Die Übertragung der Axialantriebsbewegung bzw. der zugehörigen axialen Auswerferkräfte von der Auswerferplattenaktuatoreinheit 11d, die vorzugsweise durch ein herkömmliches universelles Auswerferplattenpaket mit einer üblichen Schnittstelle zu einer maschinenseitigen Hydraulik gebildet ist, erfolgt im gezeigten Beispiel durch Schubstangen 15. Die Auswerferkoppeleinheit 11c ist vorzugsweise dafür eingerichtet, von der Einsatzseite des Druckgießwerkzeugsystems her gesteuert werden zu können und ist vorzugweise mit geeigneter Steuerintelligenz ausgerüstet, wie sie dem Fachmann für diesen Anwendungszweck an sich bekannt ist. Zum Verständnis sei erwähnt, dass in der Ansicht von Fig. 7 die besagte Einsatzseite des Systems oben und die davon abgewandte Rückseite des Druckgießwerkzeugsystems unten liegen. Die Auswerferkoppeleinheit 11c ist insbesondere dafür eingerichtet, die Kopplung der Auswerferplatteneinheit 11a an die Auswerferplattenaktuatoreinheit 11d gleichzeitig mit dem Montieren bzw. Lösen des Formeinsatzes 3 von der Grundplatte 1 automatisch herzustellen bzw. zu lösen.

In vorteilhaften Realisierungen ist die Auswerferplatteneinheit 11a an der Baueinheit des Formeinsatzes 3 vormontierbar und kann auf diese Weise an ihm vormontiert gehalten werden, bevor der Formeinsatz 3 in diesem Fall dann zusammen mit der Auswerferplatteneinheit 11a an der Grundplatte 1 montiert wird. So ist dies auch beim Ausführungsbeispiel der Fig. 7 der Fall.

Das Montieren und Lösen des Formeinsatzes 3 an bzw. von der Befestigungsseite 1a der Grundplatte 1 kann in entsprechenden Ausführungen, wie im gezeigten Beispiel von Fig. 7, unter Verwendung einer ansteuerbaren Haltebolzeneinheit 16 erfolgen. Dazu ist eine dem Fachmann an sich geläufige Realisierung für die Haltebolzeneinheit 16 mit vorzugsweise einer Mehrzahl von entsprechend automatisiert steuerbar anzubringenden und lösenden Haltebolzen verwendbar, wie in Fig. 7 lediglich schematisch angedeutet.

In vorteilhaften Ausführungsformen sind, wie in einer Realisierung gemäß Fig. 8 veranschaulicht, das mindestens eine Schieberbauteil 4 und der zugehörige Satz, z.B. der Satz 3₁, von konturgebenden Formbauteilen, z.B. den Formbauteilen 3₁₁ bis 3₁ₚ, dafür eingerichtet, das Schieberbauteil 4 an dem oder den zugehörigen Formbauteilen, d.h. dem von diesem oder diesen gebildeten Formeinsatz 3, lösbar vormontiert zu halten. Speziell sind dazu in der ausschnittweisen Schnittansicht von Fig. 8 für das mindestens eine Schieberbauteil 4 als an sich dem Fachmann geläufige Schieberbauteilkomponenten eine Schieberhydraulik 4c und weitere Schieber-Standardbaugruppen 4a insbesondere in Form von Führungs- und Verriegelungskomponenten sowie ein Schiebervorsatz 4b gezeigt, der in ebenfalls üblicher Weise gussteilindividuell konturgebend ausgeführt ist und dazu mit dem montierten Satz 3₁ konturgebender Formbauteile, d.h. dem für das zu gießende Gussteil montierten Formeinsatz 3, zusammenwirkt. In Fig. 8 sind dabei analog zu Fig. 2 die Grundplatten 1 sowohl für die feste als auch die bewegliche Formhälfte und der jeweils an deren Befestigungsseite 1a montierte, zugehörige Formeinsatz 3 ausschnittweise gezeigt.

Die besagten Schieberkomponenten und damit das oder die Schieberbauteile 4 insgesamt sind im gezeigten Bespiel von Fig. 8 mittels einer jeweiligen Verankerungsnase 17 und zugeordneten Schraubverbindungen mit dem jeweiligen Formeinsatz 3 verbunden und zusätzlich verschraubt. Ein zusätzliches Fixieren des jeweiligen Schieberbauteils 4 an der jeweiligen Grundplatte 1 bzw. dem Grundaufbau des Systems, der einsatzseitig mit der jeweiligen Grundplatte 1 abschließt, ist dadurch nicht notwendig. Vielmehr kann sich das jeweilige Schieberbauteil 4 während des Betriebs der Druckgießmaschine bzw. des Druckgießwerkzeugsystems selbständig auf entsprechenden Stützflächenbereichen an der Befestigungsseite 1a der jeweiligen Grundplatte 1 abstützen, um während des Formfüllvorgangs entstehende Drücke und daraus resultierende Druckkräfte abzufangen. Andererseits ermöglicht die Vormontage des oder der Schieberbauteile 4 an dem oder den Formeinsätzen 3 bzw. dem ihn jeweils bildenden Satz 3₁ konturgebender Formbauteile 3₁₁ bis 3₁ₚ ein schnelles Rüsten der Druckgießmaschine mit den zum Gießen des jeweils gewünschten Gussteils nötigen Komponenten des Druckgießwerkzeugsystems, ohne dass dazu der Grundaufbau des Systems, d.h. die jeweilige Grundplatte 1 und die an diese rückseitig anschließenden Systemkomponenten, von der Druckgießmaschine demontiert werden müssen.

Zudem ermöglicht die Erfindung in entsprechenden Ausführungen ein vergleichsweise schnelles und einfaches Aufrüsten und Abrüsten der Druckgießmaschine, wenn Gussteile anderer Gestalt und/oder Größe gegossen werden sollen. Es genügt hierfür, den jeweiligen Satz konturgebender Formbauteile und die zugehörigen Werkzeugaufnahme-Modulbauteile zu montieren bzw. zu demontieren, während der Grundaufbau des Druckgießwerkzeugsystems einschließlich der Grundplatten unverändert belassen werden kann. Der gesamte Rüst- bzw. Abrüstvorgang zum Werkzeugwechsel, wenn ein Gussteil anderer Gestalt gegossen werden soll, kann vollständig von der Einsatzseite des Werkzeugsystems bzw. der Druckgießmaschine her erfolgen, ohne dass Demontageeingriffe in den Grundaufbau bzw. Montage- oder Demontagemaßnahmen am Grundaufbau erforderlich sind. Der Satz konturgebender Formbauteile kann in entsprechenden Realisierungen vormontiert bereitgestellt werden, bei Bedarf zuzüglich zugehöriger Auswerferkomponenten und Schieberkomponenten, und die so gebildete Baueinheit kann als Ganzes in die Druckgießmaschine eingebracht und von der Werkzeugeinsatzseite her an der betreffenden Grundplatte montiert und fixiert werden, vorzugsweise automatisiert oder teilautomatisiert und unter Verwendung einer entsprechenden ansteuerbaren Haltebolzeneinheit mit automatisiert anzubringenden und zu lösenden Haltebolzen oder alternativen Befestigungsmitteln.

Wie die gezeigten und die weiteren oben erläuterten Ausführungsbeispiele deutlich machen, stellt die Erfindung ein vorteilhaft modulares Druckgießwerkzeugsystem zur Verfügung, das eine modulare und damit flexible und variable Verwendung von an einer Grundplatte montierbaren Werkzeugkomponenten zum Gießen von Gussteilen unterschiedlicher Gestalt und/oder in unterschiedlicher Orientierung der Gießkontur in Bezug auf die Maschinenrichtungen der Druckgießmaschine ermöglicht. Die Erfindung bietet dadurch Vorteile insbesondere auch für das Gießen von Prototypen und die Kleinserienproduktion von Gussteilen.

## Patentansprüche

1. Druckgießwerkzeugsystem für eine Druckgießmaschine zum Gießen von Gussteilen, mit
- einer maschinenbezogenen Grundplatte (1),
- mindestens einem Satz (3₁) von konturgebenden Formbauteilen (3₁₁ bis 3₁ₚ), die in einer Montageposition an der Grundplatte (1) eine Gießkontur (12) für ein zugehöriges, zu gießendes Gussteil bilden, und
- einer Mehrzahl von nicht-konturgebenden Werkzeugaufnahme-Modulbauteilen (2₁ bis 2ₙ),
- wobei die Grundplatte (1), die Werkzeugaufnahme-Modulbauteile (2₁ bis 2ₙ) und die konturgebenden Formbauteile (3₁₁ bis 3₁ₚ) dafür eingerichtet sind, zum Gießen des jeweiligen Gussteils den zugehörigen Satz (3₁) von konturgebenden Formbauteilen (3₁₁ bis 3₁ₚ) und einen zugeordneten Satz (W₁) der Werkzeugaufnahme-Modulbauteile (2₁ bis 2ₙ) lösbar an einer Befestigungsseite (1a) der Grundplatte (1) zu montieren,
- wobei die Grundplatte (1) auf der Befestigungsseite (1a) ein Befestigungsraster aus einer Mehrzahl von in einem regelmäßigen oder unregelmäßigen Muster über einen Befestigungsbereich (Bb) hinweg verteilt angeordneten Befestigungspunkten (14) aufweist und
- wobei der mindestens eine Satz (3₁) von konturgebenden Formbauteilen (3₁₁ bis 3₁ₚ) mit dem zugeordneten Satz (W₁) der Werkzeugaufnahme-Modulbauteile (2₁ bis 2ₙ) in wenigstens zwei unterschiedlichen Orientierungen (P₁, P₂) und/oder in wenigstens zwei gegeneinander verschobenen Positionen an der Befestigungsseite (1a) der Grundplatte (1) montierbar ist und/oder mehrere Sätze (3₁, 3₂, 3₃) von konturgebenden Formbauteilen (3₁₁ bis 3₁ₚ, 3₂₁ bis 3_{2q}, 3₃₁ bis 3₃ᵣ) mit einem jeweils zugeordneten Satz (W₁, W₂, W₃) der Werkzeugaufnahme-Modulbauteile (2₁ bis 2ₙ) zur wahlweise Montage an der Befestigungsseite (1a) der Grundplatte (1) vorhanden sind.

2. Druckgießwerkzeugsystem nach Anspruch 1, wobei das Befestigungsraster durch ein zweidimensionales Feld der Befestigungspunkte (14) gebildet ist, bei dem die Befestigungspunkte (14) in mehreren parallelen Reihen aufeinanderfolgend angeordnet sind, die voneinander in einer zu einer Reihenrichtung (Rz) nicht-parallelen Reihenabstandsrichtung (R_{S}) beabstandet sind.

3. Druckgießwerkzeugsystem nach Anspruch 1 oder 2, wobei eine erste und eine zweite der wenigstens zwei unterschiedlichen Orientierungen (P₁, P₂) um eine zur Grundplatte (1) senkrechte Achse (8) gegeneinander verdreht sind, die sich innerhalb des Befestigungsbereichs (Bb) befindet.

4. Druckgießwerkzeugsystem nach einem der Ansprüche 1 bis 3, wobei mindestens eines (2f) der nicht-konturgebenden Werkzeugaufnahme-Modulbauteile (2₁ bis 2ₙ) mindestens zweien (W₁, W₂) der Sätze (W₁, W₂, W₃) der Werkzeugaufnahme-Modulbauteile (2₁ bis 2ₙ) angehört.

5. Druckgießwerkzeugsystem nach einem der Ansprüche 1 bis 4, wobei mindestens eines (2g) der nicht-konturgebenden Werkzeugaufnahme-Modulbauteile (2₁ bis 2ₙ) mindestens einem (W₁) der Sätze (W₁, W₂, W₃) der Werkzeugaufnahme-Modulbauteile (2₁ bis 2ₙ) nicht angehört.

6. Druckgießwerkzeugsystem nach einem der Ansprüche 1 bis 5, wobei die nicht-konturgebenden Werkzeugaufnahme-Modulbauteile (2₁ bis 2ₙ) mindestens ein Schieberbauteil (4) und/oder mindestens ein Führungsbauteil (5) und/oder mindestens ein Entlüftungsbauteil (6) und/oder mindestens eine Zentrierplatte (7) umfassen.

7. Druckgießwerkzeugsystem nach einem der Ansprüche 1 bis 6, wobei die nicht-konturgebenden Werkzeugaufnahme-Modulbauteile (2₁ bis 2ₙ) eine erste, maschinentypspezifische Gruppe (MG1) von einem oder mehreren der nicht-konturgebenden Werkzeugaufnahme-Modulbauteile (2₁ bis 2ₙ) und eine zweite, maschinentypübergreifende Gruppe (MG2) von einem oder mehreren der nicht-konturgebenden Werkzeugaufnahme-Modulbauteile (2₁ bis 2ₙ) umfassen.

8. Druckgießwerkzeugsystem nach Anspruch 7 in Verbindung mit Anspruch 6, wobei zu der ersten Gruppe das mindestens eine Führungsbauteil (5) und/oder das mindestens eine Entlüftungsbauteil (6) und/oder die mindestens eine Zentrierplatte (7) gehört und/oder zu der zweiten Gruppe das mindestens eine Schieberbauteil (4) gehört.

9. Druckgießwerkzeugsystem nach einem der Ansprüche 1 bis 8, wobei
- der oder mindestens einer der Sätze (3₁) von konturgebenden Formbauteilen (3₁₁ bis 3₁ₚ) einen Formeinsatz (3) bildet, der zur Montage als Baueinheit an der Befestigungsseite (1a) der Grundplatte (1) eingerichtet ist und auf seiner der Grundplatte (1) zugewandten Rückseite (3a) eine auswerferbezogene Ausnehmung (3b) aufweist, und
- in der auswerferbezogenen Ausnehmung (3b) des Formeinsatzes eine Auswerferplatteneinheit (11a) axialbeweglich aufnehmbar ist, mit der ein oder mehrere Auswerferstifte (11b) bewegungsgekoppelt sind und die durch eine Auswerferkoppeleinheit (11c) mit einer grundplattenseitigen Auswerferplattenaktuatoreinheit (11d) lösbar koppelbar ist.

10. Druckgießwerkzeugsystem nach Anspruch 9, wobei die Auswerferplatteneinheit (11a) an der Baueinheit des Formeinsatzes (3) vormontiert gehalten ist.

11. Druckgießwerkzeugsystem nach Anspruch 9 oder 10, wobei es eine ansteuerbare Haltebolzeneinheit (16) zur lösbaren Befestigung des Formeinsatzes (3) an der Befestigungsseite (1a) der Grundplatte (1) beinhaltet.

12. Druckgießwerkzeugsystem nach einem der Ansprüche 6 bis 11, wobei das mindestens eine Schieberbauteil (4) und der zugehörige Satz (3₁) von konturgebenden Formbauteilen (3₁₁ bis 3₁ₚ) dafür eingerichtet sind, das Schieberbauteil (4) an dem oder den zugehörigen Formbauteilen (3₁₁ bis 3₁ₚ) lösbar vormontiert zu halten.

## Claims

1. Diecasting tool system for a diecasting machine for casting cast parts, comprising
- a machine-related base plate (1);
- at least one set (3₁) of contour-imparting mould components (3₁₁ to 3₁ₚ) which in an assembled position on the base plate (1) form a casting contour (12) for an associated cast part to be cast; and
- a plurality of not contour-imparting tool receptacle module components (2₁ to 2ₙ);
- wherein the base plate (1), the tool receptacle module components (2₁ to 2ₙ) and the contour-imparting mould components (3₁₁ to 3₁ₚ) are configured for releasably assembling the associated set (3₁) of contour-imparting mould components (3₁₁ to 3₁ₚ) and an assigned set (W₁) of the tool receptacle module components (2₁ to 2ₙ) on a fastening side (1a) of the base plate (1) to cast the respective cast part;
- wherein the base plate (1) on the fastening side (1a) comprises a fastening grid of a plurality of fastening points (14) which are disposed so as to be distributed in a regular or irregular pattern across a fastening region (Bb); and
- wherein the at least one set (3₁) of contour-imparting mould components (3₁₁ to 3₁ₚ), conjointly with the assigned set (W₁) of the tool receptacle module components (2₁ to 2ₙ) is capable to be assembled in at least two different orientations (P₁, P₂) and/or in at least two mutually displaced positions on the fastening side (1a) of the base plate (1), and/or a plurality of sets (3₁, 3₂, 3₃) of contour-imparting mould components (3₁₁ to 3₁ₚ, 3₂₁ to 3_{2q}, 3₃₁ to 3ᵣ) with a respectively assigned set (W₁, W₂, W₃) of the tool receptacle module components (2₁ to 2ₙ) are present for selective assembling on the fastening side (1a) of the base plate (1).

2. Diecasting tool system according to Claim 1, wherein the fastening grid is formed by a two-dimensional field of the fastening points (14) in which field the fastening points (14) are disposed in a plurality of successive parallel rows which are mutually spaced apart in a row spacing direction (Rs) which is non-parallel to a row direction (Rz).

3. Diecasting tool system according to Claim 1 or 2, wherein a first and a second of the at least two different orientations (P₁, P₂) are rotated in relation to one another about an axis (8) which is perpendicular to the base plate (1) and is situated within the fastening region (Bb).

4. Diecasting tool system according to any one of Claims 1 to 3, wherein at least one (2f) of the not contour-imparting tool receptacle module components (2₁ to 2ₙ) is associated with at least two (W₁, W₂) of the sets (W₁, W₂, W₃) of the tool receptacle module components (2₁ to 2ₙ).

5. Diecasting tool system according to any one of Claims 1 to 4, wherein at least one (2g) of the not contour-imparting tool receptacle module components (2₁ to 2ₙ) is not associated with at least one (W₁) of the sets (W₁, W₂, W₃) of the tool receptacle module components (2₁ to 2ₙ).

6. Diecasting tool system according to any one of Claims 1 to 5, wherein the not contour-imparting tool receptacle module components (2₁ to 2ₙ) comprise at least one slider component (4) and/or at least one guide component (5) and/or at least one ventilation component (6) and/or at least one centring plate (7).

7. Diecasting tool system according to any one of Claims 6, wherein the not contour-imparting tool receptacle module components (2₁ to 2ₙ) comprise a first, machine type-specific group (MG1) of one or a plurality of the not contour-imparting tool receptacle module components (2₁ to 2ₙ) and a second, machine type-spanning group (MG2) of one or a plurality of the not contour-imparting tool receptacle module components (2₁ to 2ₙ).

8. Diecasting tool system according to Claim 7 in conjunction with Claim 6, wherein the at least one guide component (5) and/or the at least one ventilation component (6) and/or the at least one centring plate (7) are/is associated with the first group, and/or the at least one slider component (4) is associated with the second group.

9. Diecasting tool system according to any one of Claims 1 to 8, wherein
- the set or at least one of the sets (3₁) of contour-imparting mould components (3₁₁ to 3₁ₚ) forms a mould insert (3) which is configured for assembling as a functional unit on the fastening side (1a) of the base plate (1), and on the rear side (3a) thereof that faces the base plate (1) has an ejector-related clearance (3b); and
- an ejector plate unit (11a) to which one or a plurality of ejector pins (11b) are coupled for movement and which by way of an ejector coupling unit (11c) is capable of being releasably coupled to a base plate-side ejector plate actuator unit (11d) is capable of being received so as to be axially movable in the ejector-related clearance (3b) of the mould insert.

10. Diecasting tool system according to Claim 9, wherein the ejector plate unit (11a) is held pre-assembled on the functional unit of the mould insert (3).

11. Diecasting tool system according to Claim 9 or 10, wherein said diecasting tool system includes an actuatable retaining bolt unit (16) for releasably fastening the mould insert (3) to the fastening side (1a) of the base plate (1).

12. Diecasting tool system according to any one of Claims 6 to 11, wherein the at least one slider component (4) and the associated set (3₁) of contour-imparting mould components (3₁₁ to 3₁ₚ) are configured for releasably holding the slider component (4) pre-assembled on the associated mould component or components (3₁₁ to 3₁ₚ).

## Revendications

1. Système d'outil de moulage sous pression pour une machine de moulage sous pression destinée au moulage de pièces, avec
une plaque de base (1) relative à la machine,
au moins un jeu (31) d'éléments de moule définissant le contour (311 à 31p) qui, dans une position de montage sur la plaque de base (1), forment un contour de moulage (12) pour une pièce correspondante à mouler, et
une pluralité de composants modulaires de logement d'outil ne définissant pas le contour (21 à 2n),
sachant que la plaque de base (1), les composants modulaires de logement d'outil (21 à 2n) et les éléments de moule définissant le contour (311 à 31p) sont conçus pour permettre, en vue du moulage de la pièce respective, de monter de manière amovible, sur un côté de fixation (1a) de la plaque de base (1), le jeu correspondant (31) d'éléments de moule définissant le contour (311 à 31p) ainsi qu'un jeu associé (W1) de composants modulaires de logement d'outil (21 à 2n),
sachant que la plaque de base (1) présente, sur le côté de fixation (1a), une trame de fixation constituée d'une pluralité de points de fixation (14) disposés selon un motif régulier ou irrégulier et répartis sur une zone de fixation (Bb), et
sachant que ledit au moins un jeu (31) d'éléments de moule définissant le contour (311 à 31p) peut être monté avec le jeu associé (W1) des composants modulaires de logement d'outil (21 à 2n) dans au moins deux orientations différentes (P1, P2) et/ou dans au moins deux positions décalées l'une de l'autre, sur le côté de fixation (1a) de la plaque de base (1) et/ou que plusieurs jeux (31, 32, 33) d'éléments de moule définissant le contour (311 à 31p, 321 à 32q, 331 à 33r) avec un jeu correspondant respectif (W1, W2, W3) de composants modulaires de logement d'outil (21 à 2n) sont disponibles pour le montage optionnel sur le côté de fixation (1a) de la plaque de base (1).

2. Système d'outil de moulage sous pression selon la revendication 1, sachant que la trame de fixation est constituée d'un champ bidimensionnel de points de fixation (14) dans lequel les points de fixation (14) sont disposées successivement sur plusieurs rangées parallèles
qui sont espacées les unes des autres dans une direction d'espacement des rangées (Rs) non parallèle à une direction des rangées (Rz).

3. Système d'outil de moulage sous pression selon la revendication 1 ou 2, sachant qu'une première et une seconde desdites au moins deux orientations différentes (P1, P2) sont décalées angulairement l'une par rapport à l'autre autour d'un axe (8) perpendiculaire à la plaque de base (1) et situé à l'intérieur de la zone de fixation (Sb).

4. Système d'outil de moulage sous pression selon l'une des revendications 1 à 3, sachant qu'au moins un (2f) des composants modulaires de logement d'outil (21 à 2n) ne définissant pas le contour appartient au moins à deux (W1, W2) des jeux (W1, W2, W3) de composants modulaires de logement d'outil (21 à 2n).

5. Système d'outil de moulage sous pression selon l'une des revendications 1 à 4, sachant qu'au moins un (2g) des composants modulaires de logement d'outil (21 à 2n) ne définissant pas le contour n'appartient pas à au moins à un (W1) des jeux (W1, W2, W3) de composants modulaires de logement d'outil (21 à 2n).

6. Système d'outil de moulage sous pression selon l'une des revendications 1 à 5, sachant que les composants modulaires de logement d'outil (21 à 2n) ne définissant pas le contour comprennent au moins un élément de coulisseau (4) et/ou au moins un élément de guidage (5) et/ou au moins un élément d'évacuation des gaz (6) et/ou au moins une plaque de centrage (7).

7. Système d'outil de moulage sous pression selon l'une des revendications 1 à 6, sachant que les composants modulaires de logement d'outil (21 à 2n) ne définissant pas le contour comprennent un premier groupe spécifique au type de machine (MG1) d'un ou de plusieurs composants modulaires de logement d'outil (21 à 2n) ne définissant pas le contour et un second groupe compatible avec tous les types de machine (MG2) d'un ou de plusieurs composants modulaires de logement d'outil (21 à 2n) ne définissant pas le contour.

8. Système d'outil de moulage sous pression selon la revendication 7 associée à la revendication 6, sachant que ledit au moins un élément de guidage (5) et/ou ledit au moins un élément d'évacuation des gaz (6) et/ou ladite au moins une plaque de centrage (7) appartiennent au premier groupe et/ou que ledit au moins un élément de coulisseau (4) appartient au second groupe.

9. Système d'outil de moulage sous pression selon l'une des revendications 1 à 8, sachant que
ledit ou au moins un des jeux (31) d'éléments de moule (311 à 31p) définissant le contour forme un insert de moule (3) qui est conçu pour le montage sous forme d'unité de construction sur le côté de fixation (1a) de la plaque de base (1) et qui présente, sur son côté arrière (3a) tourné vers la plaque de base (1), un évidement relatif à l'éjecteur (3b), et
qu'une unité de plaque d'éjection (11a) est logeable de manière axialement mobile dans l'évidement relatif à l'éjecteur (3b) de l'insert de moule, avec laquelle une ou plusieurs broches d'éjection (11b) sont couplées en mouvement, et qui peut être accouplée de manière amovible avec une unité d'actionnement de plaque d'éjection (11d) côté plaque de base, par le biais d'une unité d'accouplement d'éjecteur (11 c).

10. Système d'outil de moulage sous pression selon la revendication 9, sachant que l'unité de plaque d'éjection (11a) est maintenue prémontée sur l'unité de construction de l'insert de moule (3).

11. Système d'outil de moulage sous pression selon la revendication 9 ou 10, sachant qu'il contient une unité à boulons de retenue (16) pilotable pour la fixation amovible de l'insert de moule (3) sur le côté de fixation (1a) de la plaque de base (1).

12. Système d'outil de moulage sous pression selon l'une des revendications 6 à 11, sachant que ledit au moins un élément de coulisseau (4) et le jeu correspondant (31) d'éléments de moule définissant le contour (311 à 31p) sont conçus pour maintenir prémonté de manière amovible l'élément de coulisseau (4) au ou aux éléments de moule (311 à 31p) correspondants.
